# EUROPÄISCHE PATENTSCHRIFT

(11) **EP 0 355 405 B1**
(45) Veröffentlichungstag und Bekanntmachung des Hinweises auf die Patenterteilung: **28.04.1993**
(21) Anmeldenummer: 89113320.9
(22) Anmeldetag: 20.07.1989
(51) Int. Cl.: B62D 7/20

(54) **Radführung für Kraftfahrzeuge**
Wheel guiding device for motor vehicles
Guidage de roue pour véhicules

(30) Priorität: 17.08.1988 DE 3827854
(43) Veröffentlichungstag der Anmeldung: 28.02.1990
(73) Patentinhaber: TRW Fahrwerksysteme GmbH & Co. KG, 40547 Düsseldorf (DE)
(72) Erfinder: Busse, Fritz, D-4010 Hilden (DE)
(74) Vertreter: Stenger, Watzke & Ring Patentanwälte

(56) Entgegenhaltungen:
- FR-A- 2 439 095
- GB-A- 1 275 207
- GB-A- 2 094 729
- US-A- 2 757 028
- US-A- 4 066 149
- US-A- 4 657 424

## Beschreibung

Gegenstand der Erfindung ist eine Radführung für Kraftfahrzeuge mit einer Spurstange oder einem Querlenker in Rohrform, mit einem in das Rohr eingesetzten Übertragungsstab zur Übertragung von Zugkräften, der einenends von einer kraft- oder formschlüssigen Halterung in dem Rohr gehalten ist und anderenends aus dem Rohrende herausragt.

Bei einer gattungsgemäßen Radführung sind die Spurstange bzw. der Querlenker Sicherheitsbauteile, die nicht durch Überlastung so vorgeschädigt werden dürfen, daß sie beim späteren Betrieb versagen und gefährliche Situationen verursachen können. Auch muß sichergestellt sein, daß über solche Spurstangen und Querlenker keine unkontrolliert hohe Lasten übertragen werden, die zu nicht eindeutig erkennbaren Vorschädigungen in anschließenden, für die Sicherheit wichtigen Bauteilen führen. Aus diesem Grunde hat man bereits Lenkgestängeteile so ausgeführt, daß Überlastungen vor einem Bruch oder einer Materialtrennung zu solchen bleibenden Verformungen der Bauteile führen, daß die erfolgte Überlastung für den Benutzer am Fahr- oder Lenkverhalten des Fahrzeuges klar erkennbar ist. So wurden druckbelastete Lenkgestängeteile als Knickstreben ausgelegt, die bei einer definierten Drucklast ohne eine Bauteiltrennung wegknicken. Auch wurden Lenkgestängeteile so vorgebogen, daß sie sich bei einer übergroßen Drucklast weiter auswölben und eine am Fahrverhalten deutlich spürbare Verformung entsteht. Bei Lenkgestängeteilen, die durch eine Zuglast überbeansprucht werden können, sind jedoch vergleichbare Überlastsicherungen nicht bekannt geworden.

Bekannt ist jedoch aus der US-PS 27 57 028 eine Radführung für Kraftfahrzeuge mit einer Spurstange, deren Ende in einen rohrförmigen Abschnitt der gleichen Spurstange eingreift und wobei zwischen diesen beiden Konstruktionsteilen eine zylindrische Gummihülse als Stoßdämpfer eingesetzt ist, um damit sowohl kurze Stöße als auch Radvibrationen zu absorbieren.

Davon ausgehend liegt der Erfindung die **Aufgabe** zugrunde, eine Radführung mit einer Spurstange oder einem Querlenker so zu verbessern, daß eine Zugüberlastung eine am Fahrverhalten des Kraftfahrzeuges deutlich spürbare, definierte Verformung von Spurstange bzw. Querlenker bewirkt.

Eine technische **Lösung** dieser Aufgabe besteht darin, daß der Übertragungsstab zwischen Halterung und Rohrende eine Sollbruchstelle aufweist und zwischen der Sollbruchstelle und dem Rohrende einen Absatz hat, wobei das Rohr zwischen Absatz und Rohrende mit einer Rohrverengung versehen ist, die einen Anschlag für den Absatz beim Reißen der Sollbruchstelle bildet, um eine völlige Bauteiltrennung zu verhindern.

Bei einer erfindungsgemäßen Radführung wird die Zugkraft von der Spurstange bzw. von dem Querlenker über den Übertragungsstab weitergeleitet. Bei einer eine bestimmte Grenzlast überschreitenden Zugkraft reißt die Sollbruchstelle ab. Dann bewegt sich der Übertragungsstab unter einer fortwährenden Zugbelastung mit seinem Absatz bis zu der Rohrverengung, wodurch die Zugkraft zwischen Übertragungsstab und Rohr weiter übertragen werden kann. Die Längenänderung der Einrichtung führt jedoch zu einer solch ausgeprägten Geometrieveränderung der Radführung, daß jeder Fahrer durch das Fahrverhalten des Kraftfahrzeuges eindeutig vorgewarnt wird.

Eine erfindungsgemäße Radführung hat somit die **Vorteile,** daß eine erfolgte Überlastung am Fahrverhalten erkennbar ist, so daß der Benutzer einen Hinweis auf die Reparaturbedürftigkeit der Radführung erhält, bevor diese als Folge der Überlastung endgültig versagt und eine gefahrenträchtige Situation entsteht.

Eine weitere technische **Lösung** besteht bei einem in das Rohr eingesetzten Übertragungsstab zur Übertragung von Zugkräften aber auch darin, daß der Übertragungsstab beidenends von kraft- oder formschlüssigen Halterungen in dem Rohr gehalten ist, wobei er eine zwischen den Halterungen ausgebildete Trennfuge des Rohres überbrückt und zwischen einer der Halterungen und der Trennfuge eine Sollbruchstelle aufweist und zwischen der Sollbruchstelle und der Trennfuge einen Absatz hat, wobei das Rohr zwischen Absatz und Trennfuge mit einer Rohrverengung versehen ist, die einen Anschlag für den Absatz beim Reißen der Sollbruchstelle bildet.

Bei dieser anderen Lösung greift die Zugkraft an den Rohrenden des Rohres an, wobei der Übertragungsstab die Trennfuge des zweigeteilten Rohres überbrückt, indem er die Zugkraft zwischen den beiden Halterungen überträgt. Wird das zweigeteilte Rohr mit der Grenzlast oder darüber hinaus auf Zug beansprucht, so reißt auch bei dieser Einrichtung die Sollbruchstelle ab. Unter einer fortdauernden Zugbelastung bewegt sich der Absatz des Übertragungsstabes bis zur Rohrverengung, wobei die Trennfuge des Rohres auseinanderklafft und das Rohr um ein definiertes Stück verlängert wird. Hieraus ergibt sich wiederum eine Änderung der Geometrie der Radführung, welche vom Fahrer an einem veränderten Fahrverhalten des Kraftfahrzeuges erkannt werden kann, bevor die Radführung völlig funktionsuntüchtig wird.

Die Sollbruchstelle kann durch eine gezielte örtliche Veränderung der Werkstoffeigenschaften des Übertragungsstabes bereitgestellt werden. Bei einer bevorzugten Ausgestaltung ist die Sollbruchstelle jedoch als Einschnürung des Übertragungsstabes ausgebildet, so daß sie einfach eingedreht werden kann.

Bei einer weiteren Ausgestaltung hat das Rohr zwischen Absatz und Rohrende bzw. Trennfuge eine Führung für den Übertragungsstab, so daß der Übertragungsstab auch bei abgerissener Sollbruchstelle eine geradlinige Verlängerung der Spurstange bzw. des Querlenkers bildet. Hierdurch wird ein eindeutiges Lenkverhalten auch nach dem Abreißen der Sollbruchstelle sichergestellt. Dabei hat der Übertragungsstab vorzugsweise zwischen Führung und Rohrende bzw. Trennfuge bzw. weiteren Rohröffnungen Dichtringe zum Abdichten gegen die Rohrinnenwand, so daß Feuchtigkeit oder Schmutz nicht in die Führung eindringen können und durch Korrosion die für den Sollbruch maßgebliche Grenzlast beeinflußen.

Bei einer weiteren Ausgestaltung ist die formschlüssige Halterung eine entgegen der Zugkraft sich an einer Rohrverjüngung abstützende Verdickung des Übertragungsstabes. Wenn der Übertragungsstab eine Trennfuge des Rohres überbrückt, können beidseitig der Trennfuge sich an Rohrverjüngungen abstützende Verdickungen des Übertragungsstabes vorgesehen sein. Wenn der Übertragungsstab zur Übertragung von Zugkräften aus dem Rohrende herausragt, weist er vorzugsweise zwischen Rohrverengung und Rohrende eine weitere formschlüssige Halterung auf, die eine sich entgegen einer Druckkraft an einer weiteren Rohrverjüngung abstützende weitere Rohrverdickung des Übertragungsstabes ist, so daß vor dem Sollbruch zwischen Rohr und Übertragungsstab auch Druckkräfte spielfrei übertragen werden können. Dieses Ziel wird auch erreicht, wenn die formschlüssige Halterung eine sich auch entgegen einer Druckkraft an einer Rohrverjüngung abstützende Verdickung des Übertragungsstabes ist, weil dann dieselbe Verdickung sowohl Zug- als auch Druckkräfte übertragen kann.

Bei einer weiteren Ausgestaltung ist die kraftschlüssige Halterung eine Preßverbindung zwischen Rohr und Übertragungsstab, die leicht durch bereichsweises radiales Verpressen des Rohres gegen den Übertragungsstab hergestellt werden kann. Die Preßverbindung ist so zu dimensionieren, daß sie eine die Grenzlast für Sollbruch übersteigende Zugbelastung aufnehmen kann.

Bei einer sich an einer Rohrverjüngung abstützenden Verdickung des Übertragungsstabes bzw. einer Preßverbindung zwischen Rohr und Übertragungsstab kann ein aus dem Rohrende einer Spurstange herausragender Gewindeabschnitt mit einem Gelenkschaft eines Spurstangengelenkes verschraubt sein, wodurch eine Verstellbarkeit der Spur ermöglicht wird.

Bei einer weiteren Ausgestaltung ist die formschlüssige Halterung eine Gewindeverbindung zwischen Rohr und Übertragungsstab, die eine Verstellung des Übertragungsstabes innerhalb des Rohres ermöglicht. Bei einem zur Übertragung von Zugkräften aus dem Rohrende einer Spurstange herausragenden Übertragungsstab mit einer Gewindeverbindung ist der Übertragungsstab vorzugsweise zugleich ein Gelenkschaft eines mit der Spurstange verbundenen Spurstangengelenkes, so daß die Spur durch Schrauben der Gewindeverbindung eingestellt werden kann.

Weitere Einzelheiten und Vorteile des Gegenstandes der Erfindung ergeben sich aus der nachfolgenden Beschreibung der zugehörigen Zeichnung, die drei Ausgestaltungen einer erfindungsgemäßen Rohrverbindung zeigt. In der Zeichnung zeigt:
- Fig. 1: eine Spurstange mit aus dem Rohrende herausragenden und mit einem Gelenkschaft verschraubten Übertragungsschaft, der Verdickungen zum Abstützen an Rohrverjüngungen aufweist im Längsschnitt;
- Fig. 2: Spurstange mit aus dem Rohrende herausragender und einen Gelenkschaft bildender Übertragungsstange, die eine Gewindeverbindung mit dem Rohr aufweist im Längsschnitt;
- Fig. 3: Spurstange oder Querlenker mit eine Trennfuge überbrückendem Übertragungsstab, der beidenends eine Preßverbindung mit dem Rohr aufweist im Längsschnitt.

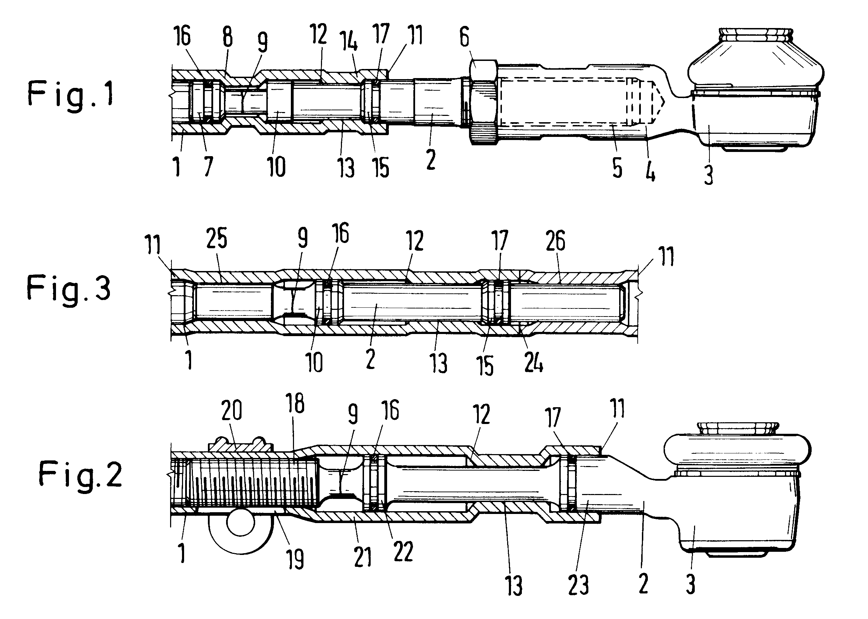

Die Fig. 1 zeigt eine als Rohr 1 ausgebildete Spurstange, die über einen Übertragungsstab 2 mit einem Spurstangengelenk 3 verbunden ist, wobei ein Gelenkschaft 4 längseinstellbar mit einem Gewindeabschnitt 5 des Übertragungsstabes 2 verschraubt und mittels einer Kontermutter 6 gesichert ist.

Der Übertragungsstab 2 hat eine in den Innendurchmesser des Rohres 1 passende zylindrische Verdickung 7, welche sich unter einer Zugbelastung an einer Innenkante einer Rohrverjüngung 8 abstützt.

An die Verdickung 7 schließt sich eine Sollbruchstelle 9 an, deren Durchmesser entsprechend der Materialfestigkeit und der geforderten Bruchlast bemessen ist.

An die Sollbruchstelle 9 grenzt ein zylindrischer Absatz 10 an, dessen Durchmesser wiederum etwa dem Innendurchmesser des Rohres 1 entspricht.

Zwischen dem Absatz 10 und einem Rohrende 11 ist das Rohr 1 mit einer Rohrverengung versehen, die einen Anschlag 12 für den Absatz 10 und zugleich eine Führung 13 für den Übertragungsstab 2 bildet. Die Rohrverengung kann beispielsweise durch einen von außen angedrückten Achtkant erzeugt sein. Sie bildet zugleich eine weitere Rohrverjüngung 14, an der sich eine weitere zylindrische Verdickung 15 des Übertragungsstabes 2 unter einer Druckbelastung abstützt.

Wenn die Sollbruchstelle 9 beim Überschreiten einer Grenzlast abreißt, verschiebt sich der Absatz 10 in dem Rohr 1 bis zu dem Anschlag 12, wodurch sich die Spur und das Fahrverhalten des Fahrzeuges ändern. Bevor die Sollbruchstelle 9 reißt, ist der Übertragungsstab 2 von den Verdickungen 7,15 in seiner Stellung gegenüber dem Rohr eindeutig festgelegt.

Die Verdickungen 7,15 weisen umlaufende Nuten auf, in die an der Rohrinnenwand anliegende Dichtringe 16,17 eingesetzt sind, welche insbesondere ein Festkorrodieren des Übertragungsstabes 2 an den Rohrverjüngungen 8,14 sowie der Führung 13 und der Rohrinnenwand verhindern.

Die Fig. 2 zeigt das Rohr 1 einer Spurstange, in das ein Übertragungsstab 2 eingesetzt ist, welcher zugleich den Gelenkschaft eines Spurstangengelenkes 3 bildet und von einer Gewindeverbindung 18 in dem Rohr 1 gehalten wird. Das Rohr 1 weist im Bereich der Gewindeverbindung 18 einen Längsschlitz 19 auf, so daß die Gewindeverbindung 18 nach dem Einstellen der Spur leichter mittels einer Klemmschelle 20 gesichert werden kann.

An die Gewindeverbindung 18 grenzt die Sollbruchstelle 9 an. In diesem Bereich hat das Rohr 1 eine Aufweitung 21, die zugleich der Aufnahme eines zylindrischen Absatzes 22 dient. Nach dem Einsetzen des Übertragungsstabes 2 ist das Rohr zwischen Absatz 22 und Rohrende 11 zylindrisch oder vielkantig zusammengepresst, um eine Rohrverengung mit einem Anschlag 12 und einer Führung 13 zu bilden. Die Rohrverengung ist so hergestellt, daß sie die Drehbarkeit und Längsverschieblichkeit des Übertragungsstabes 2 im Rohr 1 ermöglicht, um die Einstellung der Spur und deren Verlängerung im Fall des Abreißens der Sollbruchstelle 9 zu gewährleisten. Im Überlastfall legt sich der Absatz 22 des an der Sollbruchstelle 9 gerissenen Übertragungsstabes 2 an den Anschlag 12 an, so daß die gewünschte Geometrieänderung der Radführung eintritt.

Der Übertragungsstab 2 liegt nahe dem Rohrende 11 mit einer zylindrischen Verdickung 23 an der Rohrinnenwand an. In umlaufenden Nuten des Absatzes 22 und der Verdickung 23 sind Dichtringe 16,17 eingesetzt, welche insbesondere die Führung 13 vor Korrosion schützen.

Schließlich zeigt die Fig. 3 eine Spurstange oder einen Querlenker, dessen Rohr 1 zweigeteilt ist, wobei die Rohrteile an einer Trennfuge 24 stumpf zusammenstoßen. Eine Zugkraft kann an den Rohrenden 11 abgegriffen werden. Die Trennfuge 24 wird von einem Übertragungsstab 2 überbrückt, der vollständig in das Rohr 1 eingesetzt ist. Hierzu ist der Übertragungsstab 2 beidenends mittels Preßverbindungen 25,26 mit dem Rohr 1 verbunden, die beidseits der Trennfuge 24 angeordnet sind. Die Preßverbindungen können durch zylindrisches oder vielkantiges Verpressen des Rohres 1 hergestellt sein. Sie sind so dimensioniert, daß sie alle Druck- und Zuglasten aufnehmen und höhere Lasten übertragen, als eine Sollbruchstelle 9.

Die Sollbruchstelle 9 ist zwischen der Preßverbindung 25 und der Trennfuge 24 ausgebildet. An die Sollbruchstelle 9 grenzt ein zylindrischer Absatz 10 an, der beim Abreißen der Sollbruchstelle 9 bis zu dem Anschlag 12 einer zugleich eine Führung 13 bildenden Rohrverengung bewegt werden kann. Nach dem Auftreten einer Überlast klafft somit die Trennfuge 24 auseinander und tritt die gewünschte Veränderung der Radführungsgeometrie ein. Voraussetzung hierfür ist, daß die ebenfalls durch radiales Einpressen der Rohrwand erzeugte Rohrverengung ein axiales Verschieben des Übertragungsstabes 2 ermöglicht.

An die Führung 13 grenzt eine zylindrische Verdickung 15 des Übertragungsstabes 2 an, welche insbesondere als Träger für einen Dichtring 17 dient. Zusammen mit dem Dichtring 16 des Absatzes 10 sorgt der Dichtring 17 für Korrosionsfreiheit im Bereich der Führung 13 und sichert eine engtolerierte Grenzlast für den Abriß der Sollbruchstelle 9. Die Sollbruchstellen 9 der beschriebenen Ausführungsformen sind so dimensioniert, daß sie betriebsübliche Belastungen von etwa 10% der bei einem Unfall gegebenenfalls auftretenden Belastungen unbeschadet überstehen.

### Bezugszeichenliste

- 1: Rohr
- 2: Übertragungsstab
- 3: Spurstangengelenk
- 4: Gelenkschaft
- 5: Gewindeabschnitt
- 6: Kontermutter
- 7: Verdickung
- 8: Rohrverjüngung
- 9: Sollbruchstelle
- 10: Absatz
- 11: Rohrende
- 12: Anschlag
- 13: Führung
- 14: Rohrverjüngung
- 15: Verdickung
- 16: Dichtring
- 17: Dichtring
- 18: Gewindeverbindung
- 19: Längsschlitz
- 20: Klemmschelle
- 21: Aufweitung
- 22: Absatz
- 23: Verdickung
- 24: Trennfuge
- 25: Preßverbindung
- 26: Preßverbindung

## Patentansprüche

1. Radführung für Kraftfahrzeuge mit einer Spurstange oder einem Querlenker in Rohrform, mit
einem in das Rohr (1) eingesetzten Übertragungsstab (2) zur Übertragung von Zugkräften,
der einenends von einer kraft- oder formschlüssigen Halterung in dem Rohr gehalten ist und anderenends aus dem Rohrende herausragt,
**dadurch gekennzeichnet,**
daß der Übertragungsstab (2) zwischen Halterung und Rohrende (11) eine Sollbruchstelle (9) aufweist und
zwischen der Sollbruchstelle (9) und dem Rohrende (11) einen Absatz (10;22) hat,
wobei das Rohr (1) zwischen Absatz (10;22) und Rohrende (11) mit einer Rohrverengung versehen ist, die einen Anschlag (12) für den Absatz (10;22) beim Reißen der Sollbruchstelle (9) bildet.

2. Radführung für Kraftfahrzeuge mit einer Spurstange oder einem Querlenker in Rohrform, mit
einem in das Rohr (1) eingesetzten Übertragungsstab (2) zur Übertragung von Zugkräften,
**dadurch gekennzeichnet,**
daß der Übertragungsstab (2) beidenends von kraft- oder formschlüssigen Halterungen in dem Rohr gehalten ist, wobei er eine zwischen den Halterungen ausgebildete Trennfuge (24) des Rohres (1) überbrückt, daß
der Übertragungsstab (2) zwischen einer der Halterungen und der Trennfuge (24) eine Sollbruchstelle (9) aufweist und zwischen der Sollbruchstelle (9) und der Trennfuge (24) einen Absatz (10) hat,
wobei das Rohr (1) zwischen Absatz (10) und Trennfuge (24) mit einer Rohrverengung versehen ist, die einen Anschlag (12) für den Absatz (10) beim Reißen der Sollbruchstelle (9) bildet.

3. Radführung nach einem der Ansprüche 1 bis 2, dadurch gekennzeichnet, daß die Sollbruchstelle (9) als Einschnürung des Übertragungsstabes (2) ausgebildet ist.

4. Radführung nach einem der Ansprüche 1 bis 3, dadurch gekennzeichnet, daß das Rohr (1) zwischen Absatz (10;22) und Rohrende (11) bzw. Trennfuge (24) eine Führung (13) für den Übertragungsstab (2) hat.

5. Radführung nach Anspruch 4, dadurch gekennzeichnet, daß der Übertragungsstab (2) zwischen Führung (13) und Rohrende (11) bzw. Trennfuge (24) bzw. weiteren Rohröffnungen (19) Dichtringe (16,17) zum Abdichten gegen die Rohrinnenwand hat.

6. Radführung nach einem der Ansprüche 1 bis 5, dadurch gekennzeichnet, daß die formschlüssige Halterung eine entgegen der Zugkraft sich an einer Rohrverjüngung (8) abstützende Verdickung (7) des Übertragungsstabes (2) ist.

7. Radführung nach Anspruch 6 in Verbindung mit Anspruch 1, dadurch gekennzeichnet, daß der Übertragungsstab (2) zwischen Rohrverengung und Rohrende (11) eine weitere formschlüssige Halterung aufweist, die eine sich entgegen einer Druckkraft an einer weiteren Rohrverjüngung (14) abstützende weitere Verdickung (15) des Übertragungsstabes (2) ist.

8. Radführung nach einem der Ansprüche 1 bis 5, dadurch gekennzeichnet, daß die formschlüssige Halterung eine Gewindeverbindung (18) zwischen Rohr (1) und Übertragungsstab (2) ist.

9. Radführung nach einem der Ansprüche 1 bis 5, dadurch gekennzeichnet, daß die kraftschlüssige Halterung eine Preßverbindung (25,26) zwischen Rohr (1) und Übertragungsstab (2) ist.

10. Radführung nach einem der Ansprüche 6 bis 9 in Verbindung mit Anspruch 1, dadurch gekennzeichnet, daß der Übertragungsstab (2) an einem aus dem Rohrende (11) einer Spurstange herausragenden Gewindeabschnitt (5) mit einem Gelenkschaft (4) eines Spurstangengelenkes (3) verschraubt ist.

11. Radführung nach Anspruch 10 in Verbindung mit Anspruch 1, dadurch gekennzeichnet, daß bei einer Spurstange der Übertragungsstab (2) zugleich ein Gelenkschaft eines mit der Spurstange verbundenen Spurstangengelenkes (3) ist.

## Claims

1. Wheel guidance system for motor vehicles having a track rod or a transverse link of tubular shape and having, inserted into the tube (1), a transmission rod (2) for transmitting tensile forces which is held in the tube at one end by a non-positive or positive holding arrangement and which protrudes from the end of the tube at the other end, characterised in that the transmission rod (2) has a predetermined breaking point (9) between the holding arrangement and the tube end (11) and has a shoulder (10; 22) between the predetermined breaking point (9) and the tube end (11), the tube (1) being provided with a tube throat between the shoulder (10; 22) and the tube end (11), which tube throat forms a stop (12) for the shoulder (10; 22) on fracture of the predetermined breaking point (9).

2. Wheel guidance system for motor vehicles having a track rod or a transverse link of tubular shape and having, inserted into the tube (1), a transmission rod (2) for transmitting tensile forces, characterised in that the transmission rod (2) is held in the tube at both ends by non-positive or positive holding arrangements and bridges over a joint (24) of the tube (1) formed between the holding arrangements, in that the transmission rod (2) has a predetermined breaking point (9) between one of the holding arrangements and the joint (24) and has a shoulder (10) between the predetermined breaking point (9) and the joint (24), the tube (1) being provided with a tube throat between the shoulder (10) and the joint (24), which tube throat forms a stop (12) for the shoulder (10) on fracture of the predetermined breaking point (9).

3. Wheel guidance system according to either of Claims 1 and 2, characterised in that the predetermined breaking point (9) is configured as a necking of the transmission rod (2).

4. Wheel guidance system according to one of Claims 1 to 3, characterised in that the tube (1) has a guide (13) for the transmission rod (2) between the shoulder (10; 22) and the tube end (11) or joint (24).

5. Wheel guidance system according to Claim 4, characterised in that the transmission rod (2) has sealing rings (16, 17), for sealing against the inner wall of the tube, between the guide (13) and the tube end (11) or joint (24) or further tube openings (19).

6. Wheel guidance system according to one of Claims 1 to 5, characterised in that the positive holding arrangement is a thickening (7) of the transmission rod (2) supported on a tube taper (8) against the tensile force.

7. Wheel guidance system according to Claim 6 in association with Claim 1, characterised in that the transmission rod (2) has a further positive holding arrangement between the tube throat and the tube end (11), which positive holding arrangement is a further thickening (15) of the transmission rod (2) supported on a further tube taper (14) against a compressive force.

8. Wheel guidance system according to one of Claims 1 to 5, characterised in that the positive holding arrangement is a screw-thread connection (18) between the tube (1) and the transmission rod (2).

9. Wheel guidance system according to one of Claims 1 to 5, characterised in that the non-positive holding arrangement is a press connection (25, 26) between the tube (1) and the transmission rod (2).

10. Wheel guidance system according to one of Claims 6 to 9 in association with Claim 1, characterised in that the transmission rod (2) is screwed onto a joint shank (4) of a track rod joint (3) at a threaded section (5) protruding from the tube end (11) of a track rod.

11. Wheel guidance system according to Claim 10 in association with Claim 1, characterised in that in the case of a track rod, the transmission rod (2) is simultaneously a joint shank of a track rod joint (3) connected to the track rod.

## Revendications

1. Guidage de roue pour véhicules automobiles, comprenant une tige de connexion ou un bras oscillant transversal sous forme tubulaire, une barre de transmission (2) qui est logée dans le tube (1) et destinée à transmettre des efforts de traction et qui, d'une part, est maintenue dans le tube par une fixation solidaire par la force ou par la forme et, d'autre part, dépasse de l'extrémité du tube, caractérisé en ce que la barre de transmission (2) comporte, entre la fixation et l'extrémité (11) du tube, un point de rupture théorique (9) et possède, entre le point de rupture théorique (9) et l'extrémité (11) du tube, un gradin (10 ; 22), le tube étant pourvu, entre le gradin (10 ; 22) et son extrémité (11), d'un rétrécissement qui forme une butée (12) pour le gradin (10 ; 22) en cas de cassure au point de rupture théorique (9).

2. Guidage de roue pour véhicules automobiles, comprenant une tige de connexion ou un bras oscillant transversal sous forme tubulaire, et une barre de transmission (2) qui est logée dans le tube (1) et destinée à transmettre des efforts de traction, caractérisé en ce que, à ses deux extrémités, la barre de transmission (2) est maintenue dans le tube par des fixations solidaires par la force ou par la forme, la barre de transmission traversant ainsi un joint de séparation (24) du tube (1) formé entre les fixations, en ce que la barre de transmission (2) comporte un point de rupture théorique (9) entre l'une des fixations et le joint de séparation (24) et un gradin (10) entre le point de rupture théorique (9) et le joint de séparation (24), le tube (1) étant pourvu, entre le gradin (10) et le joint de séparation (24), d'un rétrécissement qui forme une butée (12) pour le gradin (10) en cas de cassure au point de rupture théorique (9).

3. Guidage de roue selon l'une des revendications 1 et 2, caractérisé en ce que le point de rupture théorique (9) est conçu sous la forme d'un resserrement de la barre de transmission (2).

4. Guidage de roue selon l'une des revendications 1 à 3, caractérisé en ce que le tube (1) comporte, entre le gradin (10 ; 22) et son extrémité (11) ou le joint de séparation (24), un guidage (13) pour la barre de transmission (2).

5. Guidage de roue selon la revendication 4, caractérisé en ce que la barre de transmission (2) comporte, entre le guidage (13) et l'extrémité (11) du tube ou le joint de séparation (24) ou d'autres ouvertures (19) du tube, des anneaux d'étanchéité (16, 17) pour assurer l'étanchéité par rapport à la paroi intérieure du tube.

6. Guidage de roue selon l'une des revendications 1 à 5, caractérisé en ce que la fixation solidaire par la forme est un épaississement (7) de la barre de transmission (2), ledit épaississement (7) prenant appui sur un étranglement (8) du tube à l'encontre de l'effort de traction.

7. Guidage de roue selon la revendication 6 en liaison avec la revendication 1, caractérisé en ce que la barre de transmission (2) comporte, entre le rétrécissement tubulaire et l'extrémité (11) du tube, une autre fixation solidaire par la forme qui est un autre épaississement (15) de la barre de transmission (2), ledit épaississement (15) prenant appui sur un autre étranglement (14) du tube à l'encontre d'un effort de pression.

8. Guidage de roue selon l'une des revendications 1 à 5, caractérisé en ce que la fixation solidaire par la forme est une liaison vissée (18) entre le tube (1) et la barre de transmission (2).

9. Guidage de roue selon l'une des revendications 1 à 5, caractérisé en ce que la fixation solidaire par la force est une liaison à ajustement serré (25, 26) entre le tube (1) et la barre de transmission (2).

10. Guidage de roue selon l'une des revendications 6 à 9 en liaison avec la revendication 1, caractérisé en ce que la barre de transmission (2) est vissée, par l'intermédiaire d'une portion filetée (5) sortant de l'extrémité (11) d'une tige de connexion, avec un arbre (4) d'une articulation (3) de tige de connexion.

11. Guidage de roue selon la revendication 10 en liaison avec la revendication 1, caractérisé en ce que, dans le cas d'une tige de connexion, la barre de transmission (2) est en même temps un arbre d'une articulation (3) de tige de connexion reliée à la tige de connexion.
